# EUROPEAN PATENT APPLICATION

(11) **EP 3 536 471 A1**
(43) Date of publication of application: **11.09.2019**
(21) Application number: 17866770.5
(22) Date of filing: 23.10.2017
(51) Int. Cl.: B29B 13/06, B29C 47/60, C08C 4/00, C08F 6/00

(54) **EXTRUSION DRYER FOR RUBBERY POLYMER, DRYING METHOD OF RUBBERY POLYMER, AND PRODUCTION METHOD OF RUBBERY POLYMER**

(30) Priority: 04.11.2016 JP 2016216700
(71) Applicant: Zeon Corporation, Tokyo 100-8246 (JP)
(72) Inventor: NAKAMURA, Masao, Tokyo 100-8246 (JP); SUMIURA, Kenichiro, Tokyo 100-8246 (JP); IMAI, Junichi, Tokyo 100-8246 (JP)
(74) Representative: Maiwald Patent- und Rechtsanwaltsgesellschaft mbH
(86) International application number: PCT/JP2017/038198
(87) International publication number: WO 2018/084014

(57) **Abstract**

A rubbery polymer extrusion dryer includes: a cylinder; a liner provided on an inner peripheral surface of the cylinder; a screw rotatably arranged in the liner; wherein the rubbery polymer extrusion dryer conveys a rubbery polymer by the screw rotating in the liner, wherein a plurality of grooves extending in a conveying direction of the rubbery polymer are formed on an inner surface of the liner, and wherein widths of the grooves are 0.1 mm or more and 2 mm or less.

## Description

### Technical Field

The present invention relates to a rubbery polymer extrusion dryer, a method of drying a rubbery polymer, and a method of manufacturing a rubbery polymer.

### Background Art

In manufacturing of a rubber material such as a rubbery polymer, after the polymerized rubber material is desolventized and solidified, the rubber material is dehydrated and dried in order to remove water contained in the rubber material.

As a method of drying a rubber material, extrusion drying using an expansion type extrusion dryer or the like is known. The expansion type extrusion dryer includes a liner in which a screw is rotatably arranged inside a cylinder, and as the screw rotates, a rubbery polymer is conveyed into the liner and extrusion drying is performed.

For example, Japanese Patent No. 5805304 (Patent Document 1) discloses a technique in which an expansion type extrusion dryer is used to extrude and dry a rubbery polymer. Also, International Publication Pamphlet No. WO 2006/054525 (Patent Document 2) discloses a technique in which an expansion type extrusion drying device is used to dry a water-containing rubbery polymer.

### [Prior Art Document]

### [Patent Document]

[Patent Document 1] Japanese Patent No. 5805304
[Patent Document 2] International Publication Pamphlet No. WO 2006/054525

### Summary of the Invention

### Problem to Be Solved by the Invention

However, in conventional extrusion drying techniques disclosed in Patent Documents 1 and 2, there is a problem that water remaining in a rubber material after desolventization is separated inside an extrusion drier during conveyance, and the separated water enters the interface between a liner and the material and the frictional force during conveyance decreases. Therefore, according to the conventional extrusion drying techniques, the rubber material to be dried is not sufficiently conveyed in the liner, the rubber material stays in the liner, or the rubber material leaks from a supply section. Thus, the rubbery material cannot be stably conveyed.

An object of the present invention is to provide a rubbery polymer extrusion dryer that can stably convey a rubbery polymer.

### Means for Solving the Problem

In view of the above problem, according to one aspect of the present invention, a rubbery polymer extrusion dryer includes: a cylinder; a liner provided on an inner peripheral surface of the cylinder; and a screw rotatably arranged in the liner, wherein the rubbery polymer extrusion dryer conveys a rubbery polymer by the screw rotating in the liner, wherein a plurality of grooves extending in a conveying direction of the rubbery polymer are formed on an inner surface of the liner, and wherein widths of the grooves are 0.1 mm or more and 2 mm or less.

### Effects of the Invention

According to one aspect of the present invention, it is possible to provide a rubbery polymer extrusion dryer that can stably convey a rubbery polymer.

### Brief Description of the Drawings

FIG. 1 is a diagram illustrating a rubbery polymer extrusion dryer according to an embodiment of the present invention;
FIG. 2 is an enlarged perspective view illustrating an inside part of a liner of the rubbery polymer extrusion dryer according to the embodiment of the present invention;
FIG. 3 is an expanded view of a part of the liner of the rubbery polymer extrusion dryer according to the embodiment of the present invention (first embodiment);
FIG. 4 is a cross-sectional view taken along the line IV-IV of FIG. 3;
FIG. 5 is a cross-sectional view taken along the line V-V of FIG. 3;
FIG. 6 is an expanded view of a part of a liner of a rubbery polymer extrusion dryer according to an embodiment of the present invention (second embodiment);
FIG. 7 is a cross-sectional view taken along the line VII-VII of FIG. 6;
FIG. 8 is a cross-sectional view taken along the line VIII-VIII of FIG. 6;
FIG. 9 is an expanded view of a part of a liner of a rubbery polymer extrusion dryer according to an embodiment of the present invention (third embodiment);
FIG. 10 is a cross-sectional view taken along the line X-X of FIG. 9;
FIG. 11 is a cross-sectional view taken along the line XI-XI of FIG. 9; and
FIG. 12 is a flowchart illustrating an example of a method of manufacturing a rubbery polymer according to an embodiment of the present invention.

### Embodiment for Carrying Out the Invention

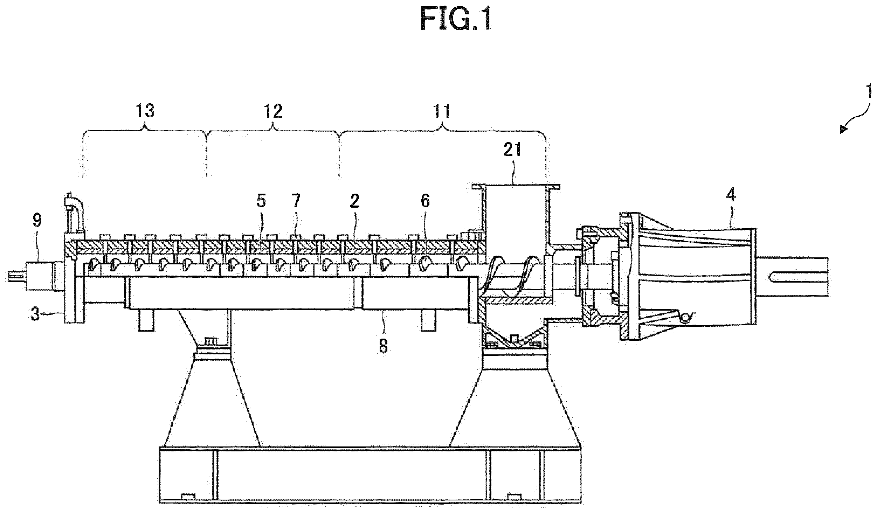

In the following, embodiments of the present invention will be described in detail with reference to the drawings. FIG. 1 is a diagram illustrating a rubbery polymer extrusion dryer according to an embodiment of the present invention. In FIG. 1, the reference numeral 1 indicates an expansion extrusion dryer that is used in the present embodiment, which is an example of a rubbery polymer extrusion dryer according to the present invention.

The extrusion dryer 1 is an extrusion dryer that dries a rubbery polymer, and includes a cylinder 2, a die 3, a driving device 4, a liner 5, a screw 6, and breaker bolts 7.

The cylinder 2 is of a cylindrical shape and is an example of a cylinder constituting a part of the rubbery polymer extrusion dryer of the present invention. A hopper 21 for supplying a rubbery polymer (rubber crumbs) into the cylinder 2 is provided on one end of the cylinder 2, and the die 3 having an ejection port (not illustrated) is attached to the other end of the cylinder 2. A jacket 8 having a steam function is provided around the cylinder 2, and it is heated by the heat of steam or cooled by water.

Note that the rubbery polymer (rubber crumbs) is of crumbs of a rubbery polymer containing water, for example, after the rubbery polymer has been dehydrated, and is an example of a rubbery polymer that is extruded and dried by the rubbery polymer extrusion dryer of the present invention. As the crumbs of such a rubbery polymer containing water, for example, a rubbery polymer having a water content of 5% to 40% can be used.

The liner 5 is provided on the inner peripheral surface of the cylinder 2. In the liner 5, the screw 6 is rotatably arranged. In a part of the liner 5, as the screw 6 rotates, the rubbery polymer is conveyed. Note that the liner 5 is an example of a liner constituting a part of the rubbery polymer extrusion dryer of the present invention.

The screw 6 is rotatably arranged in the liner 5. The screw 6 is driven by the driving device 4 and can rotate so as not to contact the inner surface of the liner 5 in the cylinder 2. Note that the screw 6 is an example of a screw constituting a part of the rubbery polymer extrusion dryer of the present invention.

The screw 6 is sectioned into a conveyance section 11, a compression section 12, and a weighing section 13 in order from the hopper 21 toward the die 3. In accordance with these sections, predetermined screw pitches and groove depths applied given to the screw 6.

Note that, by rotating the screw 6, the conveyance section 11 can convey the rubber polymer crumbs in the liner 5. The compression section 12 is provided to be in continuous with the conveyance section 11, and can apply compression action to the crumbs conveyed from the conveyance section 11 in the liner 5. The weighing section 13 is provided to be in continuous the compression section 12, and in the weighing section 13, the weight of the rubbery polymer crumbs that have passed through the compression section 12 is measured.

The breaker bolts 7 are arranged closely at predetermined intervals in the axial direction of the cylinder 2 so as to extend inward in the radial direction of the cylinder 2 from the side surface of the cylinder 2 such that the tips protrude from the liner 5. Note that the protruding positions of the breaker bolts 7 are determined so that the breaker bolts 7 do not contact the flights (blades) of the screw 6 corresponding to the screw pitches of the screw 6.

The rubbery polymer supplied into the cylinder 2 is conveyed inside the liner 5 toward the die 3 by the screw 6. The conveyance section 11 and the compression section 12 differ in pitches of the screw 6 and the number of grooves. That is, in order for the volume of the space in the liner 5 where the rubbery polymer is conveyed when the screw rotates once in the conveyance section 11 to be greater than 1.2-fold of the volume of the space in the liner 5 where the rubbery polymer is conveyed when the screw rotates once in the compression section 12, the conveyance section 11 and the compression section 12 differ in the pitches of the screw 6 and the number of grooves.

As a result, the rubbery polymer conveyed from the conveyance section 11 to the compression section 12 is compressed. At the same time, the rubbery polymer is sheared and kneaded between the flight end face of the screw 6 and the tip end portions of the breaker bolts 7. Then, the rubbery polymer extruded from the die 3 is cut by the cutter 9 into forms such as pellet shapes.

Heat given from the jacket 8 and part of an external power for rotating the screw 6 are converted into pressure and temperature for the rubbery polymer, and the rubbery polymer is conveyed to the die 3 at high temperature and high pressure and is extruded from an ejection port of the die 3 (not illustrated) to the atmosphere. At this time, a vaporized substance such as water is explosively released to the atmosphere, and the water content of the rubbery polymer rapidly decreases, and drying (expansion drying) is performed.

Note that the type of the rubbery polymer to be extruded and dried by the extrusion dryer of the present embodiment is not particularly limited. Examples of such a rubbery polymer include diene rubbers such as styrene-butadiene rubber (SBR), butadiene rubber (BR), isoprene rubber (IR), styrene-isoprene block polymer (SIS), styrene-butadiene block polymer (SBS), nitrile butadiene rubber (NBR), chloroprene rubber (CR), olefinic rubbers such as butyl rubber (IIR), ethylene-propylene-diene terpolymer rubber (EPDM), acrylic rubber, chlorosulfonated polyethylene rubber, and fluorine rubber, silicone rubber, urethane rubber, and the like. Of these, BR and SBR are preferably used.

Also, by using the extrusion drier of the present embodiment for extrusion and drying, the water content of the rubbery polymer can be reduced to about 1/3 or less of the water content before being extruded and dried. For example, a rubbery polymer having a water content of about 25% can be reduced to a water content of about 10% or less by using the extrusion dryer 1.

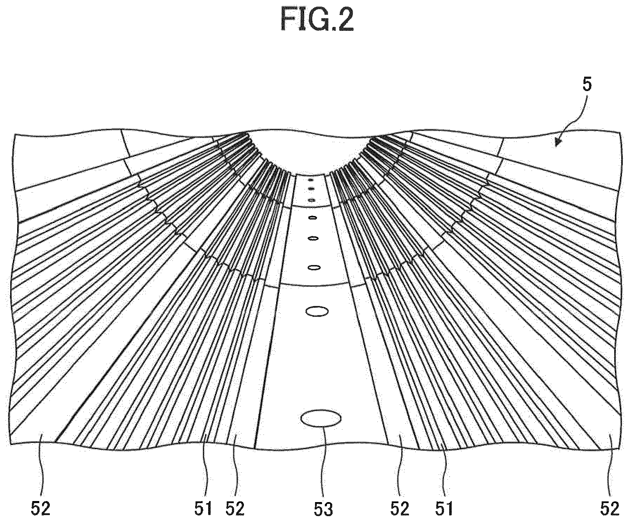

FIG. 2 is an enlarged perspective view illustrating a part (a part corresponding to the conveyance section 11) of the inner surface of the liner constituting a part of the extrusion dryer of the present embodiment. As illustrated in FIG. 2, in a part of the inner surface of the liner 5 corresponding to the conveyance section 11, two types of multiple grooves (which are grooves 51 and grooves 52) are respectively formed. The grooves 51 and the grooves 52 are both formed to extend in the direction (conveying direction) in which the crumbs in the liner 5 are conveyed. Holes 53 for attaching the breaker bolts 7 are formed between some of the grooves 52.

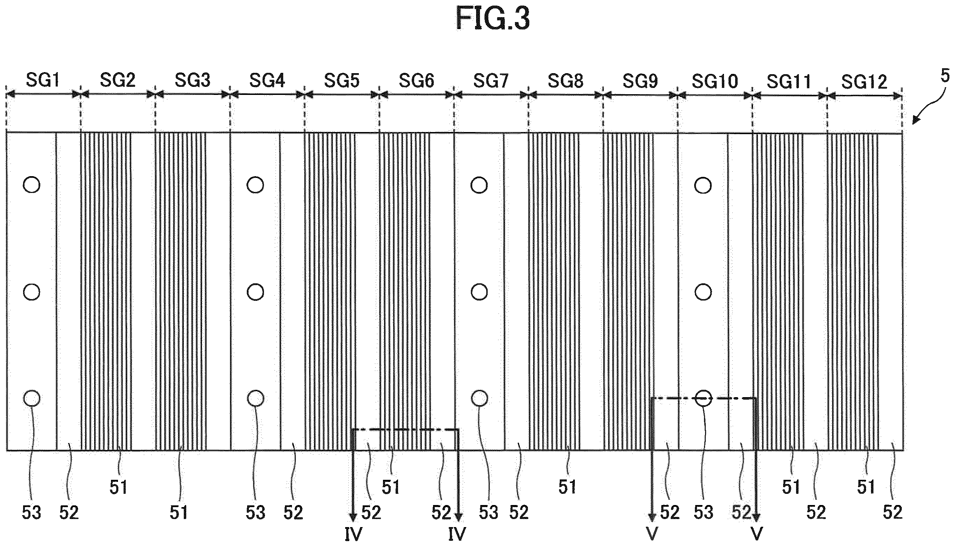

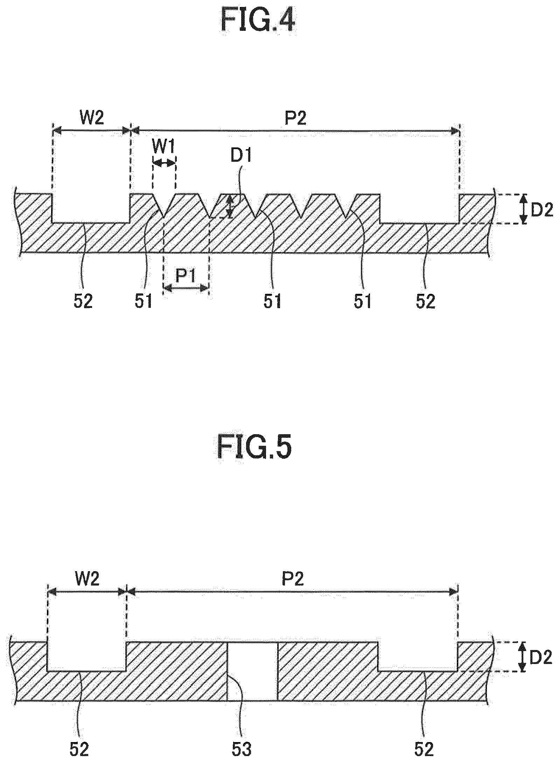

FIG. 3 is an expanded view of a part of the liner of the rubbery polymer extrusion dryer according to the embodiment of the present invention (first embodiment). FIG. 4 is a cross-sectional view taken along the line IV-IV of FIG. 3, and FIG. 5 is a cross-sectional view taken along the line V-V of FIG. 3.

As illustrated in FIG. 3, a part of the liner 5 constituting the conveyance section 11 can be constituted by twelve segments (segments SG1 to SG12). A plurality of grooves 51 are provided on eight segments (which are segments SG2, SG3, SG5, SG6, SG8, SG9, SG11, and SG12) among the twelve segments. According to the present embodiment, five grooves 51 are provided for each segment.

Also, the grooves 52 are provided for all the twelve segments (which are the segments SG1 to SG12). According to the embodiment, one groove 52 is provided for each segment.

Further, the holes 53 for attaching the breaker bolts 7 are formed on the segments SG1, SG4, SG7, and SG10. Although three holes 53 are provided for each segment, the number of holes per segment can be determined as appropriate in relation to the pitches of the screw and the sizes of the grooves.

As illustrated in FIG. 4, each groove 51 is formed with a predetermined width W1. The sizes of the widths W1 of the grooves 51 are not particularly limited, are preferably determined to be 0.1 mm or more and 2 mm or less, and are more preferably determined to be 1.0 mm or more and 2.0 mm or less. In the present specification, the width of a groove means the opening width of the groove that opens at the inner surface of the liner (see FIG. 4 and FIG. 5).

By providing the grooves 51 having such widths, when conveying a rubbery polymer, such as a rubber material (crumbs) after dehydration, from which water is easily separated during conveyance, it is possible to allow the separated water to flow to the grooves 51. Therefore, a water film is not easily formed between the rubbery polymer and the liner 5, and the frictional force between the rubbery polymer and the liner 5 can be enhanced.

As a result, when extruding and drying the rubbery polymer, it is possible to prevent the rubbery polymer from staying in the liner 5 or leaking from a supply section. Therefore, by using the extrusion dryer of the present embodiment, it is possible to convey the rubbery polymer stably in the extrusion dryer, and it is possible to increase drying efficiency.

Note that in a case where the widths W1 of the grooves are less than 0.1 mm, it is impossible to sufficiently secure spaces through which water separated in the conveyance section 11 can flow into the grooves 51. Also, in a case where the widths W1 of the grooves exceed 2 mm, because the rubbery polymer enters the grooves 51, spaces through which the water separated in the conveyance section 11 can flow into the grooves 51 are narrowed.

Also, as illustrated in FIG. 4, each groove 51 is formed at a predetermined pitch P1. The pitch P1 of the grooves 51 is not particularly limited, and is preferably determined to be 0.5 mm or more and 25 mm or less. In the present specification, a pitch of grooves means the interval between two adjacent grooves (see FIG. 4 and FIG. 5).

By providing the grooves 51 with such a pitch, it is possible to form the grooves 51 for flowing the separated water in a limited range on the inner surface of the cylindrical liner 5 without excess or deficiency. Therefore, a water film is not easily formed between the rubbery polymer and the liner 5, and the frictional force between the rubbery polymer and the liner 5 can be enhanced.

As a result, when extruding and drying the rubbery polymer, it is possible to prevent the rubbery polymer from staying in the liner or leaking from a supply section. Therefore, by using the extrusion dryer of the present embodiment, it is possible to convey the rubbery polymer stably in the extrusion dryer, and it is possible to increase drying efficiency.

Note that in a case where the pitch P1 of the grooves 51 is less than 0.5 mm, the number of grooves 51 provided on the inner surface of the cylindrical liner 5 is increased, and the areas of the portions where the grooves 51 are not provided in the inner surface of the liner 5 corresponding to the conveyance section 11 are decreased. Therefore, the contact areas between the rubbery polymer that is conveyed and the liner 5 become small, and there is a possibility that frictional force necessary for conveying cannot be obtained between the rubbery polymer and the liner 5. Also, in a case where the pitch P1 of the grooves 51 exceeds 25 mm, the number of grooves 51 provided on the inner surface of the cylindrical liner 5 decreases, and therefore, there is a possibility that sufficient spaces for flowing the separated water cannot be ensured.

Further, as illustrated in FIG. 4, each groove 51 is formed with a predetermined depth D1. The depths D1 of the grooves 51 are preferably determined to be 0.05 mm or more and 1.0 mm or less, and are more preferably determined to be 0.1 mm or more and 1.0 mm or less. In the present specification, the depth of a groove means the distance from the opening to the bottom portion of the groove opening at the inner surface of the liner (see FIG. 4 and FIG. 5).

By providing the grooves 51 with such depths, it is possible to secure spaces for flowing separated water in a limited range on the inner surface of the cylindrical liner 5. Therefore, a water film is not easily formed between the rubbery polymer and the liner 5, and the frictional force between the rubbery polymer and the liner 5 can be further enhanced.

As a result, when extruding and drying the rubbery polymer, it is possible to prevent the rubbery polymer from staying in the liner 5 or leaking from a supply section. Therefore, by using the extrusion dryer of the present embodiment, it is possible to convey the rubbery polymer stably in the extrusion dryer, and it is possible to further increase drying efficiency.

Note that in a case where the depths D1 of the groove 51 are less than 0.05 mm, the depth of each groove is too shallow. Thus, in this case, it is impossible to sufficiently secure a space in each groove for flowing water separated from the rubbery polymer. Also, in a case where the depths D1 of the grooves 51 exceed 1.0 mm, because the thickness between the bottom portions of the grooves 51 and the outer surface of the liner 5 becomes thin, the strength of the liner 5 may decrease. Also, when the depths D1 of the grooves 51 exceed 1.0 mm, there is a possibility that the rubber polymer enters the grooves 51, is peeled off from the grooves 51 after staying in the liner 5 for a long time, and is mixed in a deteriorated state into the rubber polymer being conveyed.

Note that in the present embodiment, with respect to all the grooves 51, the widths W1 are the same in size and the depths D1 are the same in size. Also, the pitch P1 of the adjacent grooves 51 in each segment is the same in size. However, the widths W1, the pitches P1, and the depths D1 of the grooves 51 may differ as long as the ranges described above are satisfied.

Also, although the grooves 51 are provided in eight segments in the present embodiment, but the grooves 51 may be provided in at least one segment. Note that the grooves 51 are an example of a plurality of grooves in the extrusion dryer of the present invention.

The cross-sectional shapes of the grooves 51 are not particularly limited, and may be, for example, shapes such as semicircular shapes, U-shapes, triangular shapes, V-shapes, square shapes, trapezoid shapes, or inverted trapezoidal shapes. In the present specification, the cross-sectional shape of a groove means a shape in a cross section orthogonal to the extending direction of the groove (see FIG. 4 and FIG. 5).

Note that the cross-sectional shapes of the grooves 51 are preferably V-shapes so that a rubbery polymer does not easily stay in the grooves 51. By making the cross-sectional shapes of the grooves 51 such shapes, a rubbery polymer does not easily stay at the bottom portions of the grooves 51, and even if the rubbery polymer enters the grooves 51, the rubbery polymer does not easily stay in the grooves 51. Therefore, it is possible to prevent the conveyance efficiency of the rubbery polymer from being decreased.

Also, as illustrated in FIG. 2 to FIG. 4, on the inner surface of the liner 5, grooves having sizes different from those of the grooves 51 may be provided. Here, the grooves having sizes different from those of the grooves 51 may include both grooves having widths larger than the widths of the grooves 51 and grooves having widths smaller than the widths of the grooves 51. In the present embodiment, the grooves 52 having widths greater than the widths of the grooves 51 are formed. As illustrated in FIG. 4 and FIG. 5, each groove 52 is formed with a predetermined width W2, a predetermined pitch P2, and a predetermined depth D2. Note that the grooves 52 are an example of a plurality of other grooves in the extrusion dryer of the present invention.

Note that the respective sizes of the widths W2 and the pitch P2 of the grooves and can be set as suited in relation to the widths W1 and the pitch P1 of the grooves 51. Further, the depths D2 of the grooves 52 can be set as suited in consideration of the thickness of the liner 5. Note that, in the present embodiment, with respect to all the grooves 52, the respective sizes of the widths W2 are the same, the respective sizes of the pitch P2 are the same, and the respective sizes of the depths D2 are the same. However, the widths W2, the pitches P2, and the depths D2 of the respective grooves 52 may be different from each other.

By providing the grooves 52 having such widths greater than the grooves 51 in size, it is possible to increase the volume of the space in which the rubbery polymer in the liner 5 is conveyed. Therefore, it is possible to increase a conveyance amount of the rubbery polymer. Also, by providing such grooves 52 in the liner 5, because the steps of the grooves 52 cause resistance in the rotation direction of the screw 6 (circumferential direction of the liner 5), a frictional force can be generated between the rubbery polymer and the liner 5.

Note that although the direction in which the grooves 51 and the grooves 52 extend is substantially parallel to the axial direction of the cylinder 2 as illustrated in FIG. 1 to FIG. 3 in the present embodiment, in a case where the conveying direction of the rubbery polymer is not parallel to the axial direction of the cylinder 2, the direction in which the grooves 51 and the grooves 52 extend may be determined as a direction that is not parallel to the axial direction. For example, if the direction in which the rubbery polymer is actually conveyed by the rotation of the screw 6 is a direction extending with a predetermined angle with respect to the axial direction of the cylinder 2, for example, the direction in which the grooves 51 and the grooves 52 extend may be determined as the direction extending with the predetermined angle.

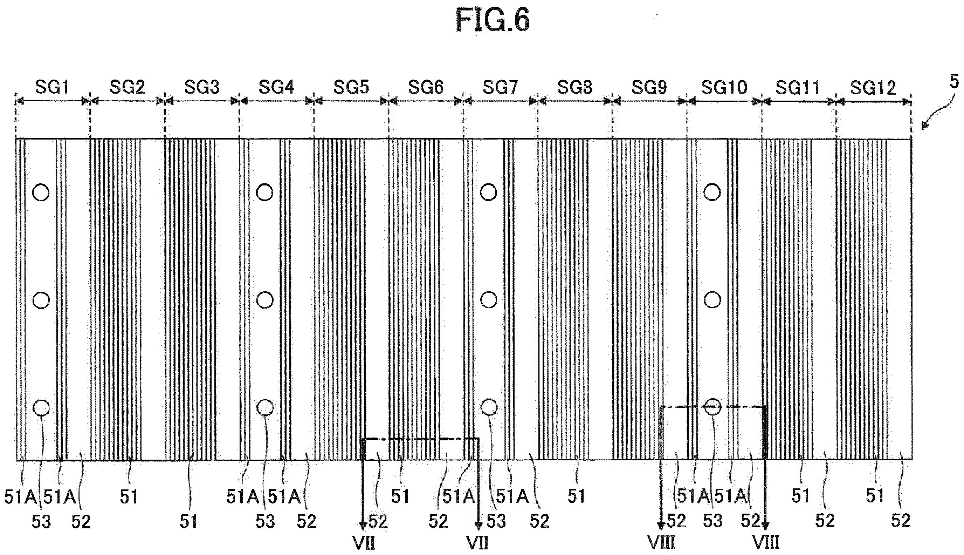

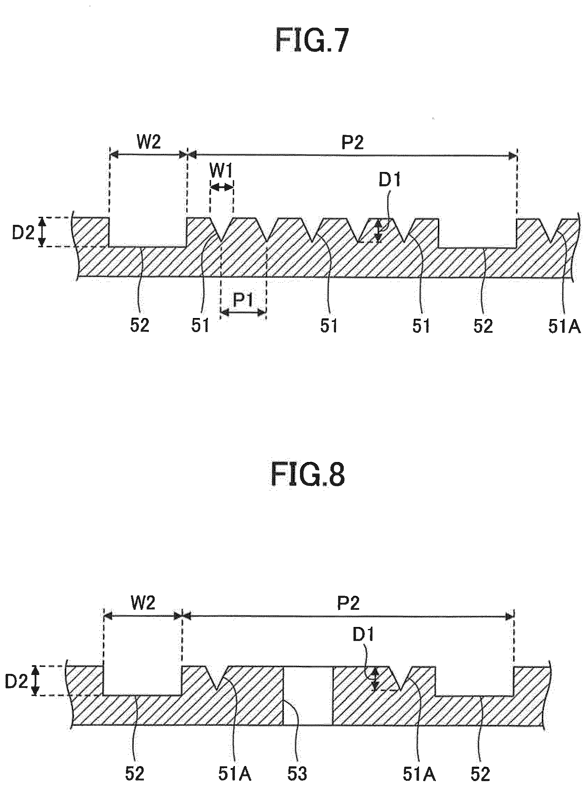

FIG. 6 is an expanded view of a part of a liner of a rubbery polymer extrusion dryer according to an embodiment of the present invention (second embodiment). FIG. 7 is a cross-sectional view taken along the line VII-VII of FIG. 6, and FIG. 8 is a cross-sectional view taken along the line VIII-VIII of FIG. 6. Note that in FIG. 6 to FIG. 8, portions common to those in FIG. 3 to FIG. 5 are denoted by the same reference numerals, and their descriptions are omitted.

In the first embodiment illustrated in FIG. 3 to FIG. 5, the grooves 51 are not provided in the segments SG1, SG4, SG7, and SG10 on which the holes 53 are provided for mounting the breaker bolts 7. With respect to the above, in the second embodiment illustrated in FIG. 6 to FIG. 8, on the segments SG1, SG4, SG7, and SG10 on which the holes 53 are provided, grooves 51A having the same sizes as the widths W1, the pitch P1, and the depths D1 of the grooves 51 are provided.

With this configuration, it is possible to substantially increase the number of grooves 51 provided on the entire liner 5. Therefore, because the spaces for flowing water separated from the rubbery polymer inside the liner 5 corresponding to the conveyance section 11 are increased, it is possible to convey the rubbery polymer further stably.

Note that although in FIG. 6 and FIG. 8, two grooves 51A are provided for each of the segments SG1, SG4, SG7, and SG10, the number of grooves 51A may be increased or decreased as suited in relation to the widths W1, the pitch P1, and the depths D1 of the grooves 51. For example, eleven grooves 51A can be provided on each of the segments SG1, SG4, SG7, and SG10 such that forty four grooves 51A are provided on the entire liner 5.

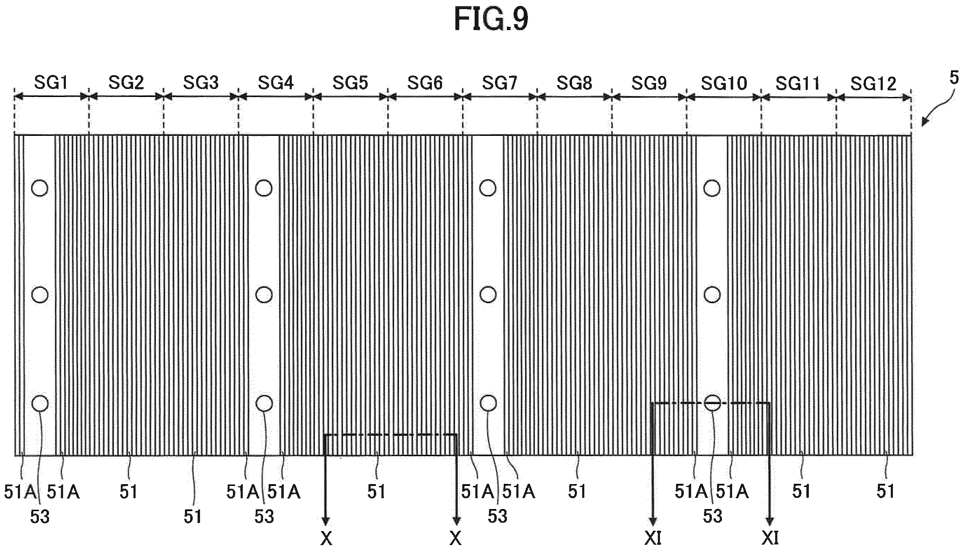

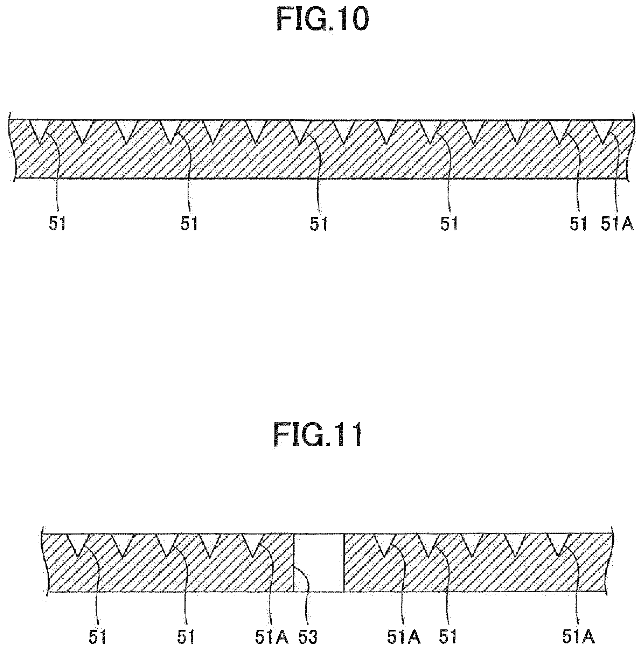

FIG. 9 is an expanded view of a part of a liner of a rubbery polymer extrusion dryer according to an embodiment of the present invention (third embodiment). FIG. 10 is a cross-sectional view taken along the line X-X of FIG. 9, and FIG. 11 is a cross-sectional view taken along the line XI-XI of FIG. 9. Note that in FIG. 9 to FIG. 11, portions common to those in FIG. 3 to FIG. 5 are denoted by the same reference numerals, and their descriptions are omitted.

In the first embodiment of FIG. 3 to FIG. 5, the groove 52 is provided for each of the twelve segments (segments SG1 to SG12). With respect to the above, in the third embodiment illustrated in FIG. 9 to FIG. 11, the grooves 52 are not provided, and instead, the grooves 51 are provided with the sizes the same as the widths W1, the pitch P1, and the depths D1. In FIG. 9 and FIG. 11, similarly to the second embodiment illustrated in FIG. 6 and FIG. 8, grooves 51A are provided for each of the segments SG1, SG4, SG7, and SG10.

With this configuration, it is possible to substantially increase the number of grooves 51 provided on the entire liner 5. Therefore, because the spaces for flowing water separated from the rubbery polymer inside the liner 5 corresponding to the conveyance section 11 are further increased, it is possible to convey the rubbery polymer stably even when the rubbery polymer includes a large amount of water.

Note that although in FIG. 9 and FIG. 11, two grooves 51A are provided for each of the segments SG1, SG4, SG7, and SG10, the number of grooves 51A may be increased or decreased as suited in relation to the widths W1, the pitch P1, and the depths D1 of the grooves 51. For example, eleven grooves 51A can be provided on each of the segments SG1, SG4, SG7, and SG10 such that forty four grooves 51A are provided on the entire liner 5.

Next, a method of drying a rubbery polymer according to the present invention will be described. In the drying method of the present embodiment, the extrusion dryer (FIG. 1) of the present embodiment can be used. Specifically, the rubbery polymer is dried by using the extrusion dryer that conveys the rubbery polymer (crumbs of the rubbery polymer) by rotating the screw 6 rotatably arranged in the liner 5 provided on the inner circumferential surface of the cylinder 2 of the extrusion dryer 1 by the driving device 4.

As illustrated in FIG. 2 to FIG. 11, the plurality of grooves 51 extending in the conveying direction of the rubbery polymer are formed on the inner surface of the liner 5. The widths of the grooves are set to from 0.1 mm to 2 mm. The grooves are provided at a pitch of 0.5 mm to 25 mm. By using the drying method of the present embodiment to dry a rubbery polymer, similarly to a case of using the extrusion dryer of the present embodiment, because it is possible to convey the rubbery polymer stably, it is possible to increase the dry amount of the rubbery polymer. Note that the drying method of the present embodiment is an example of a method of drying a rubbery polymer of the present invention.

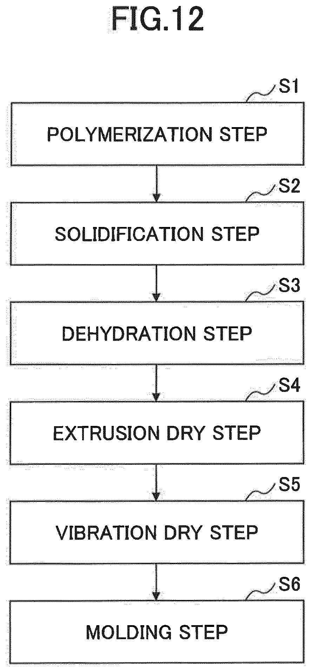

FIG. 12 is a flowchart illustrating an example of a method of manufacturing a rubbery polymer according to an embodiment of the present invention. As illustrated in FIG. 12, the method of manufacturing the rubbery polymer of the present embodiment includes a polymerization step S1, a solidification step S2, a dehydration step S3, an extrusion dry step S4, a vibration dry step S5, and a molding step S6. Note that the manufacturing method of the present embodiment is an example of a method of manufacturing a rubbery polymer of the present invention.

In the polymerization step S1, a rubber material such as butadiene is polymerized by a polymerization reaction such as emulsion polymerization or solution polymerization to obtain a latex, a polymer solution, or the like of a rubbery polymer. In the present embodiment, a polymer solution of a rubbery polymer is obtained by solution polymerization.

In the solidification step S2, the latex, the polymer solution or the like of the rubbery polymer obtained in the polymerization step S1 is desolventized and solidified by a steam stripping method to prepare a slurry of the rubbery polymer. In the present embodiment, the polymer solution of the rubbery polymer is solidified to prepare the slurry of the rubbery polymer.

In the dehydration step S3, the slurry of the rubbery polymer is dehydrated by using a dehydrator such as an extruder type squeezer to obtain crumbs having a predetermined water content. Note that the solidification step S2 and the dehydration step S3 are respective examples of a solidification step and a dehydration step included in the method of manufacturing the rubbery polymer of the present invention.

In the extrusion dry step S4, with respect to the crumbs of the dehydrated rubbery polymer, the rubbery polymer is dried by using an extrusion dryer that conveys the rubbery polymer by rotating a screw in a liner provided on the inner peripheral surface of a cylinder. In the present embodiment, the extrusion dryer 1, which is illustrated in FIG. 1, can be used. Further, the drying method of the present embodiment described above can be used. Note that the extrusion dry step S4 is an example of a dry step included in the method of manufacturing the rubbery polymer according to the present invention.

In the vibration dry step S5, the rubbery polymer, which has undergone the extrusion dry step S4, is placed on a moving vibration belt and heated while being vibrated to be dried. The rubbery polymer can be heated by directly causing hot air to contact the rubbery polymer or indirectly causing a heat medium to contact the rubbery polymer.

In the molding step S6, the weight of the rubbery polymer that has undergone the vibration dry step S5 is measured, and is molded into bales of predetermined dimensions using a molding machine. For example, the dimensions of the bales may be made such that the short sides are 36 cm, the long sides are 73 cm, and the height is 18 cm.

By manufacturing a rubbery polymer using the manufacturing method of the present embodiment, it is possible to convey the rubbery polymer stably during extrusion drying similarly to a case of using the extrusion dryer of the present embodiment. Therefore, the drying efficiency of the rubbery polymer can be increased, and the manufacturing efficiency of the rubbery polymer can be increased.

### Examples

In the following, the embodiments of the present invention will be specifically described with reference to Examples. Each of Examples and Comparative Example was measured and evaluated as follows.

### [Leakage Amount]

The leakage amount was measured as the amount of leakage from a hopper section. Specifically, the weight (kg/h) of the water-containing rubbery polymer that leaked out from the hopper section in one hour during conveyance was measured.

### [Conveyance Amount]

The conveyance amount of the rubbery polymer was measured as the weight of the rubbery polymer conveyed in one hour (the maximum value of dry conversion feed rate Q_{D} (kg/h)).

### [Rotation Speed]

The rotation speed was measured as the rotation speed Ns (rpm) of the screw controlled by the driving device.

### [Conveyance Rate]

The value Q_{D}/Ns (kg/h·rpm) obtained by dividing the measured conveyance amount by the rotation speed Ns of the screw was calculated as the conveyance rate.

### [Example 1]

In Example 1, as a rubbery polymer, butadiene rubber (BR) containing water was used. The water content of the water-containing rubbery polymer is 12%. For the liner 5, a liner having an inner diameter of 355.5 mm was used.

As illustrated in FIG. 3, the grooves 51 are provided on eight segments (segments SG2, SG3, SG5, SG6, SG8, SG9, SG11, and SG12) of twelve segments (segments SG1 to SG12. Also, for the grooves 51, the widths W1 are set to 2.0 mm, the depths D1 are set to 1.0 mm, the number N1 per segment is set to 5, and the pitch P1 is set to 20.0 mm (see FIG. 4).

The grooves 52 are provided in all the segments (segments SG1 to SG12) (see FIG. 3). Also, for the grooves 52, the widths W2 are set to 6.5 mm, the depths D2 are set to 1.0 mm, the number N2 per segment is set to 1, and the pitch P2 is set to 93.1 mm (see FIG. 4 and FIG. 5).

On the four segments (segments SG1, SG4, SG7, and SG10) of the twelve segments, the holes 53 for mounting the breaker bolts 7 are provided. On the segments (segments SG1, SG4, SG7, and SG10) on which the holes 53 are provided, the grooves 51 are not provided and only the grooves 52 are provided (see FIG. 3 and FIG. 5). The results are indicated in Table 1.

### [Example 2]

Except that the widths W1 of the grooves 51 are set to 1.0 mm, the number N1 per segment is set to 10, and the pitch P1 is set to 10.0 mm, Example 2 is the same as Example 1. The results are indicated in Table 1.

### [Example 3]

Except that the widths W1 of the grooves 51 are set to 1.0 mm, the number N1 per segment is set to 12, and the pitch is set to 8.0 mm, Example 3 has the same conditions as those in Example 1. The results are indicated in Table 1.

### [Example 4]

Except that the widths W1 of the grooves 51 are set to 1.0 mm, the number N1 per segment is set to 24, and the pitch is set to 4.0 mm, Example 4 has the same conditions as those in Example 1. The results are indicated in Table 1.

### [Example 5]

Except that the widths W1 of the grooves 51 are set to 1.0 mm, the depths of the grooves are set to 0.5 mm, the number N1 per segment is set to 24, and the pitch is set to 4.0 mm, Example 5 has the same conditions as those in Example 1. The results are indicated in Table 1.

### [Example 6]

Except that the widths W1 of the grooves 51 are set to 1.0 mm, the depths of the grooves are set to 0.1 mm, the number N1 per segment is set to 24, and the pitch is set to 4.0 mm, Example 6 has the same conditions as those in Example 1. The results are indicated in Table 1.

### [Example 7]

In Example 7, the grooves 51 are provided on two segments (for example, segments SG6 and SG8) located at the lower part of the liner 5 among the twelve segments. Note that the reason why the grooves 51 are provided at the lower part of the liner 5 is to take into consideration that separated water easily stays at the lower part of the liner 5 by gravity. The results are indicated in Table 1.

Also, in Example 7, the widths W1 of the grooves 51 are set to 1.0 mm, the depths of the grooves are set to 0.1 mm, the number N1 per segment is set to 24, and the pitch is set to 4.0 mm. Other conditions are the same as those in Example 1. The results are indicated in Table 1.

### [Example 8]

In Example 8, as a rubbery polymer, styrene-butadiene rubber (SBR) having a water content of 16% was used. The results are indicated in Table 1.

Also, the widths W1 of the grooves 51 are set to 1.0 mm and the pitch of the grooves 51 is set to 4.0 mm. Other conditions are the same as those in Example 1.

### [Comparative Example 1]

Except that the grooves 51 are not provided in the liner 5, Comparative Example 1 is the same as Example 1. The results are indicated in Table 1.

**Table 1**

| | | Comparative Example 1 | Example 1 | Example 2 | Example 3 | Example 4 | Example 5 | Example 6 | Example 7 | Example 8 |
|---|---|---|---|---|---|---|---|---|---|---|
| TYPE IN RUBBER | | BR | BR | BR | BR | BR | BR | BR | BR | SBR |
| LINER DIAMETER (mm) | | 355.5 | 355.5 | 355.5 | 355.5 | 355.5 | 355.5 | 355.5 | 355.5 | 355.5 |
| GROOVE | WIDTH W1 (mm) | 0 | 2.0 | 1.0 | 1.0 | 1.0 | 1.0 | 1.0 | 1.0 | 1.0 |
| | DEPTH D1 (mm) | 0 | 1.0 | 1.0 | 1.0 | 1.0 | 0.5 | 0.1 | 0.1 | 1.0 |
| | NUMBER N1 (mm) | 0 | 5 | 10 | 12 | 24 | 24 | 24 | 24 | 24 |
| | PITCH P1 (mm) | 0 | 20.0 | 10.0 | 8.0 | 4.0 | 4.0 | 4.0 | 4.0 | 4.0 |
| | TOTAL NUMBER | 0 | 40 | 80 | 96 | 192 | 192 | 192 | 48 | 192 |
| | PERCENTAGE IN CIRCUMFERENCE (%) | 0 | 67 | 67 | 67 | 67 | 67 | 67 | 16 | 67 |
| EVALUATION RESULT | LEAKAGE AMOUNT (kg/h) | 251 | 53 | 22 | 1.5 | 0.2 | 0.1 | 12.0 | 86.0 | 0.1 |
| | MAXIMUM VALUE OF DRY CONVERSION FEED RATE Q_{D} (kg/h) | 3500 | 4700 | 5000 | 5300 | 6500 | 6000 | 5000 | 4500 | 7000 |
| | ROTATION SPEED Nₛ (rpm) | 160 | 160 | 160 | 120 | 110 | 100 | 100 | 160 | 160 |
| | Q_{D}/Nₛ (kg/h ·rpm) | 21.9 | 29.4 | 31.3 | 44.2 | 59.1 | 60.0 | 50.0 | 28.1 | 43.8 |

From Table 1, in the extrusion dryer 1 in which the grooves 51 are provided on parts of the liner 5 corresponding to the conveyance section 11 (Examples 1 to 8), as compared to the extrusion dryer in which the grooves 51 are not provided in the liner, it was found that the leakage amount of the rubbery polymer from the hopper 21 is significantly reduced.

Also, it was found that when the grooves 51 are provided on the liner 5, the conveyance amount is increased even at the same or smaller screw rotation speed as compared with the case where the grooves 51 are not provided.

Although the embodiment of the present invention has been described above, the present invention is not limited to a specific embodiment, and various modifications and changes may be made within the scope of the invention described in claims.

The present international application is based on and claims priority to Japanese Patent Application No. 2016-216700, filed on November 4, 2016, the entire contents of which are hereby incorporated herein by reference.

### Description of the Reference Numerals

- 1: extrusion dryer
- 2: cylinder
- 3: die
- 4: driving device
- 5: liner
- 6: screw
- 7: breaker bolt
- 8: jacket
- 51: groove
- 52: groove
- 53: hole

## Claims

1. A rubbery polymer extrusion dryer comprising:
a cylinder;
a liner provided on an inner peripheral surface of the cylinder; and
a screw rotatably arranged in the liner;
wherein the rubbery polymer extrusion dryer conveys a rubbery polymer by the screw rotating in the liner,
wherein a plurality of grooves extending in a conveying direction of the rubbery polymer are formed on an inner surface of the liner, and
wherein widths of the grooves are 0.1 mm or more and 2 mm or less.

2. The rubbery polymer extrusion dryer according to claim 1, wherein the grooves are provided at a pitch of 0.5 mm or more and 25 mm or less.

3. The rubbery polymer extrusion dryer according to claim 1 or 2, wherein cross-sectional shapes of the grooves are V-shapes.

4. The rubbery polymer extrusion dryer according to any one of claims 1 to 3, wherein a plurality of other grooves having widths greater than the widths of the grooves and extending in the conveying direction are further formed on the inner surface of the liner.

5. A method of drying a rubbery polymer, the method comprising:
drying the rubbery polymer by using an extrusion dryer that conveys the rubbery polymer by rotating a screw in a liner provided on an inner peripheral surface of a cylinder,
wherein a plurality of grooves extending in a conveying direction of the rubbery polymer are formed on an inner surface of the liner, and
wherein widths of the grooves are 0.1 mm or more and 2 mm or less, and
wherein the grooves are provided at a pitch of 0.5 mm or more and 25 mm or less.

6. A method of manufacturing a rubbery polymer, the method comprising:
a solidification step of solidifying a latex or a polymer solution of a rubbery polymer to prepare a slurry of the rubbery polymer,
a dehydration step of dehydrating the slurry,
a dry step of drying the dehydrated rubbery polymer,
wherein in the dry step, the rubbery polymer is conveyed by rotating a screw in a liner provided on an inner peripheral surface of a cylinder,
wherein a plurality of grooves extending in a conveying direction of the rubbery polymer are formed on the inner surface of the liner, and
wherein widths of the grooves are 0.1 mm or more and 2 mm or less, and
wherein the grooves are provided at a pitch of 0.5 mm or more and 25 mm or less.
